Europäisches Patentamt

European Patent Office

Office européen des brevets

(19)

(11) Publication number: **0 030 868**
**A1**

# (12) EUROPEAN PATENT APPLICATION

(21) Application number: **80304555.8**

(22) Date of filing: **17.12.80**

(51) Int. Cl.³: **H 01 M 6/16**

(30) Priority: **17.12.79 US 103903**

(43) Date of publication of application:
**24.06.81 Bulletin 81/25**

(84) Designated Contracting States:
**CH DE FR GB LI**

(71) Applicant: ESB INTERNATIONAL CORPORATION
2625 Concord Pike
Wilmington Delaware 19803(US)

(72) Inventor: Johnson, Dennis Paul
3817 Birch Avenue
Madison Wisconsin 53711(US)

(74) Representative: Greenstreet, Cyril Henry et al,
Thames House (Fifth floor) Millbank
London SW1P 4QF(GB)

(54) Non-aqueous electrolytes and cells using such electrolytes.

(57) A non-aqueous electrolyte, which is particularly suitable for use at temperatures below 0°C, comprises lithium trifluoromethylsulphonate dissolved in a mixture of propylene carbonate and dimethoxyethane.

Such an electrolyte is suitable for use in cells with light metal anodes.

EP 0 030 868 A1

0030868

Non-aqueous electrolytes and cells using such electrolytes

This invention relates to non-aqueous electrolytes and more particularly to the use of such electrolytes in cells having light metal anodes.

Anodes of light metal, for example lithium, have a high energy density by virtue of the low atomic weight and high standard potential of the metal. They are thus particularly suitable for use in small cells. However, most light metals react with water, and it is therefore necessary for a non-aqueous electrolyte to be used. Such electrolytes generally consist of an ionisable salt dissolved in an organic solvent, which may be a single liquid or a mixture of liquids.

Many different electrolytes have been proposed. U.S. Patent No. 4 128 691 discloses electrolytes consisting of a mixture of three organic solvents with an alkaline solute. The first solvent must have a dielectric constant greater than 35, the second solvent is a linear polyether with its ether groups in the $\gamma$-position and the third solvent is chosen to be capable of dissolving large quantities of solute. One example given as a suitable solvent mixture is 60% by volume polypropylene carbonate, 20% by volume dimethoxyethane and 20% by volume dioxolane. Suitable solutes include lithium perchlorate and lithium hexafluorophosphate.

U.S. Patent No. 4 048 403 discloses a cell having a lithium anode, a lead oxide cathode and a non-aqueous electrolyte. A solution of lithium trifluoromethylsulphonate in a 50-50 volume % mixture of dioxolane and dimethyoxyethane is given as an example of a suitable electrolyte.

U.S. Patent No. 4 060 675 discloses a cell having a lithium anode, a metal arsenite cathode and a non-aqueous electrolyte. A 1.0 to 1.4 molar solution of lithium perchlorate in a mixture of propylene carbonate and dimethoxyethane is given as an example of a suitable electrolyte.

While cells having light metal anodes and containing these electrolytes perform satisfactorily at temperatures above $0^{\circ}C$, their performance deteriorates rapidly at lower temperatures. Some of them are also toxic or explosive.

These disadvantages are overcome, according to the present invention, by the use of an electrolyte which comprises lithium trifluoromethylsulphonate dissolved in a mixture of propylene carbonate and dimethoxyethane.

In the electrolyte of the invention, the propylene carbonate preferably comprises at least 50%, and more preferably 60-90%, by weight of the solvent. Most preferably the solvent consists of 70% propylene carbonate and 30% dimethoxyethane.

The concentration of lithium trifluoromethyl-sulphonate ($LiCF_3SO_3$) dissolved in the solvent mixture should be from 0.25 to 1.5 molar, and preferably the solution is from 0.4 to 1.2 molar. Most preferably, the electrolyte is a 1.0 molar solution of $LiCF_3SO_3$ in a mixture of 70 wt. % propylene carbonate and 30 wt. % dimethoxyethane.

Electrolytes according to the present invention can be used to construct cells that have stable performance over the temperature range from above $50^{\circ}C$ down to $-30^{\circ}C$, and are, therefore, especially suitable for use in low temperature environments.

The present invention also includes a cell having an electrolyte of the composition set forth above and also comprising a light metal anode, a cathode and a separator interposed between the anode and the cathode.

Light metal anodes that may be employed include consumable anodes made from aluminium, alkali metal, alkaline earth metal or alloys of mixtures of alkali or alkaline earth metals with each other or with other metals.

The term "alloy" as used herein includes solid solutions, such as lithium-magnesium, and intermetallic compounds, such as lithium monoaluminide.

Preferred anode materials are lithium, sodium potassium, calcium, magnesium, and alloys thereof. Of these, lithium is the most suitable since it is a ductile metal that can easily be worked and since it possesses the highest energy-to-weight ratio.

Suitable cathode materials include poly carbon fluoride ($CF_x$), metal oxides, such as $V_2O_5$, $WO_3$, $MoO_3$, $Pb_3O_4$ and $PbO$, cobalt oxides, $MnO_2$, copper oxides, metal sulphides, such as $CuS$, $CoS_2$, $In_2S_3$, $FeS$, $FeS_2$, $NiS$, metal chromates, such as $Ag_2CrO_4$, metal phosphates, such as $Ag_3PO_4$, and metal sulphates, such as $CuSO_4$, and mixtures of the above.

The separator employed should be chemically inert, insoluble in the cell system, and porous enough for the liquid to permeate through it and establish an ion transfer path between the anode and the cathode.

We prefer to employ a lithium anode and a manganese dioxide cathode.

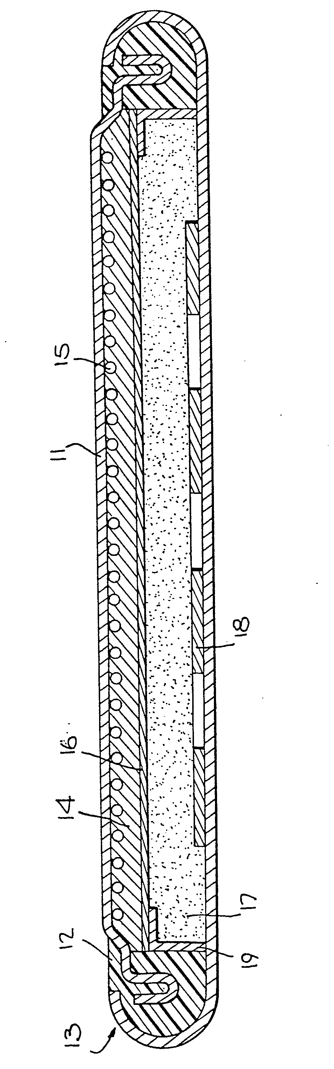

The invention will now be described in more detail with reference to the accompanying drawing in which the single figure shows a longitudinal section through the cell of the present invention.

The cell shown is of the type commonly referred to as a wafer cell. Such cells are used in, for example, watches, calculators, cameras and hearing aids. For these applications, the cell should be as small as possible for the desired power output, and it is for such applications that cells with light metal anodes and non-aqueous electrolytes are particularly suitable.

The cell shown in the figure has a lithium anode 14 and a manganese dioxide cathode 17, separated by a glass mat separator 16. A stainless steel cathode mix ring 19 surrounds the cathode. The anode, cathode and separator are enclosed by a container comprising a can 13 and a top 11 made of stainless steel. The top is insulated from the can by a polypropylene grommet or collar 12.

A nickel screen 15 is placed between the anode and the top to improve contact between them. For a similar reason, a positive current collector disc 18 is located between the cathode and the can. The remaining space in the cell is filled with the electrolyte of the invention (not shown).

The cell just described is assembled as follows: the anode 14 is punched from a sheet of lithium and assembled in the top 11 with the nickel screen 15. A mixture of approximately 40 wt. % manganese dioxide and 10 wt. % carbon is placed in a pelletizing die and compressed to obtain a handeable cathode pellet 17. The pellet is then placed in the can with the current collector 18 and the cathode mix ring 19. Electrolyte is added to the can containing the cathode and to the separator. The cell is assembled with the grommet 12 between the top and the can and is then sealed by crimping the can against the grommet.

Cells constructed as just described having different electrolytes were tested at various temperatures by discharging through a 10 000 ohm load to an end-point voltage of 2.4 volts. The results of the tests are shown in the following table:

### Voltage-temperature performance of wafer cells

Values are % of performance at 22 % C
(Figures in parentheses are average
discharge voltages in volts)

| Cell No. | 1 | 2 | 3 | 4 | 5 | 6 |
|---|---|---|---|---|---|---|
| Temp. °C | 0.5M $LiCF_3SO_3$ in 70% PC 30% DME | 0.5M $LiCF_3SO_3$ in 100% PC | 1.0M $LiCF_3SO_3$ in 70% PC 30% DME | 10.M $LiCF_3SO_3$ in 100% PC | 1.0M $LiClO_4$ in 70% PC 30% DME | 1.0M $LiClO_4$ in 100% PC |
| 22 | 100 (2.80) | 100 (2.74) | 100 (2.78) | 100 (2.75) | 100 (2.79) | 100 (2.76) |
| 0 | 93 (2.75) | 80 (2.73 | 98 (2.78) | 81 (2.75) | 94 (2.73) | 89 (2.67) |
| -18 | 82 (2.62) | 30 (2.58) | 88 (2.63) | 38 (2.57) | 72 (2.62) | 31 (2.51) |
| -29 | 81 (2.64) | 30 (2.58) | 84 (2.66) | 34 (2.63) | 24 (2.52) | 0 (--) |

PC = propylene carbonate

DME = dimethoxyethane

It will be seen that Cells Nos. 1 and 3 according to the invention retained at least 80% of their performance down to a temperature of $-29^{\circ}$C, whereas the performance of Cells Nos. 2, 4, 5 and 6 having different electrolytes fell off greatly at temperatures below $0^{\circ}$C.

Claims

1.      An electrolyte for use in a cell having a light metal anode comprising of lithium trifluoromethylsulphonate dissolved in a mixture of propylene carbonate and dimethoxyethane.

2.      An electrolyte as claimed in claim 1, in which the propylene carbonate forms at least 50% by weight of the solvent mixture.

3.      An electrolyte as claimed in claim 1 or 2 in which the solvent mixture is 70% by weight propylene carbonate and 30% by weight dimethoxyethane.

4.      An electrolyte as claimed in any preceding claim, in which the concentration of lithium trifluoromethylsulphonate in the solvent mixture is from 0.4 to 1.2 molar.

5.      An electrolyte as claimed in any preceding claim, which is a 1.0 molar solution of lithium trifluoromethylsulphonate in a mixture of 70% by weight propylene carbonate and 30% by weight dimethoxyethane.

6.      A cell comprising a light metal anode (14), a cathode (17), a separator (16) interposed between the anode and the cathode and an electrolyte as claimed in any one of claims 1 to 5.

7.      A cell as claimed in claim 6, wherein the light metal is lithium.

8.      A cell as claimed in claim 11, wherein the cathode (17) is made from manganese dioxide.

0030868

European Patent
Office

**EUROPEAN SEARCH REPORT**

Application number

EP 80 30 4555

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | H 01 M 6/16 |
| | US - A - 4 129 686 (M.J. KADUBOSKI)<br><br>* column 3, lines 50-61; column 5, lines 52-63; column 7, lines 42-57 *<br><br>& FR - A - 2 409 605<br>& GB - A - 2 008 844<br>& DE - A - 2 849 479<br><br>-- | 1,6,7, 8 | |
| D | FR - A - 2 378 361 (S.A.F.T.)<br><br>* page 3, lines 29-30; page 4, lines 29-33; page 7, claims 1,6 *<br><br>& US - A - 4 129 691<br>& GB - A - 1 543 303<br>& DE - A - 2 801 160<br><br>-- | 1 | TECHNICAL FIELDS SEARCHED (Int. Cl.³)<br><br>H 01 M 6/16<br> 10/40 |
| P/E | GB - A - 2 046 505 (E.S.B.)<br><br>* page 1, left-hand column, last paragraph; right-hand column, paragraphs 1-4 *<br><br>-- | 1,6,7 | |
| A | DE - A - 2 807 420 (VARTA)<br><br>* page 1, claims 1,2,4 *<br><br>-- | | CATEGORY OF CITED DOCUMENTS |
| A | CHEMICAL ABSTRACTS, vol. 91, no. 4, July 1979, page 205, abstract no. 23990r<br>COLUMBUS, Ohio (US)<br>& JP - A - 79 46 342 (HITACHI MAXELL, LTD.)(April 12, 1979)<br><br>* the whole abstract *<br><br>--           ./. | | X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

The present search report has been drawn up for all claims

| Place of search | Date of completion of the search | Examiner |
|---|---|---|
| The Hague | 25-03-1981 | DE VOS |

EPO Form 1503.1  06.78

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | FR - A - 2 342 561 (E.I. DU PONT DE NEMOURS AND CO.) <br><br> * page 3, lines 24-40; page 4, lines 1-6 * <br><br> & US - A - 4 084 043 <br> & DE - A - 2 708 023 <br> & GB - A - 1 571 347 <br><br> --------- | | |
| | | | TECHNICAL FIELDS SEARCHED (Int. Cl.³) |

EPO Form 1503.2    06.78